# EUROPÄISCHE PATENTSCHRIFT

(11) **EP 4 004 515 B1**
(45) Veröffentlichungstag und Bekanntmachung des Hinweises auf die Patenterteilung: **31.07.2024**
(21) Anmeldenummer: 20753288.8
(22) Anmeldetag: 22.06.2020
(51) Int. Cl.: G01M 3/16

(54) **VORRICHTUNG ZUR DETEKTION VON FLÜSSIGKEITEN**
DEVICE FOR DETECTING LIQUIDS
DISPOSITIF DE DÉTECTION DE LIQUIDES

(30) Priorität: 26.07.2019 DE 202019104142 U
(43) Veröffentlichungstag der Anmeldung: 01.06.2022
(73) Patentinhaber: Denios AG, 32549 Bad Oeynhausen (DE)
(72) Erfinder: ROITHER, Andreas, 32130 Enger (DE); LANGE, Ulrich, 59555 Lippstadt (DE); FISCHER, Joachim, 33609 Bielefeld (DE)
(74) Vertreter: Dantz, Jan Henning
(86) Internationale Anmeldenummer: PCT/EP2020/067357
(87) Internationale Veröffentlichungsnummer: WO 2021/018476

(56) Entgegenhaltungen:
- DE-A1- 102008 014 801
- JP-A- 2008 285 005
- US-A- 5 202 667
- US-A1- 2011 048 555
- US-A1- 2016 343 230
- US-A1- 2018 275 009

## Beschreibung

Die vorliegende Erfindung betrifft eine Vorrichtung zur Detektion von Flüssigkeit, insbesondere bei einer Leckage, mit einem Gehäuse, an dem an einem Boden ein kapazitiver Sensor angeordnet ist, der mit einer Steuerung zur Detektion einer unter den Boden laufenden Flüssigkeit verbunden ist, wobei der Boden auf Fußelementen beabstandet von einem Untergrund abstellbar ist.

Die EP 478 950 A2 offenbart eine Vorrichtung zum Erfassen und Melden von Flüssigkeiten, bei der an einer Unterseite eines Gehäuses ein hervorstehendes Elektrodenpaar zur konduktiven Erfassung einer Flüssigkeit vorgesehen ist. Zusätzlich ist eine Sensoreinrichtung zur optischen Erfassung der Flüssigkeit vorgesehen. Die kabelgebundene Vorrichtung ist vergleichsweise aufwändig in der Herstellung, und zudem kann es zu Problemen kommen, wenn eine große Menge an Flüssigkeit unter die Vorrichtung strömt im Hinblick auf die Abdichtung.

Die WO 2006/078105 A1 offenbart einen kapazitiven Leckagesensor, bei dem eine Leiterplatte mit dem Sensor innerhalb eines Gehäuses angeordnet ist. In das Gehäuse wird zudem ein Epoxidharz eingefüllt, so dass die Leiterplatte durch das umgebende Gehäuse und das Füllmaterial vor Umgebungseinflüssen und Verunreinigungen geschützt ist, was allerdings auch zu Störfaktoren führt und die Erfassungsgenauigkeit reduziert. Durch den horizontal ebenen Boden des Gehäuses kann es passieren, dass im Leckagefall Luftblasen unter dem Boden bleiben, die die Messung beeinflussen. Dadurch können Leckagen nicht immer schnell und zuverlässig erkannt werden.

In der US 5,202,667 ist ein Fluiddetektor offenbart, der einen Rohrabschnitt mit einem kapazitiven Sensor umfasst. Eine Sensorfläche ist dabei parallel zu einem Untergrund ausgerichtet.

Ein Sensor zur Detektion von Wasserleckagen ist in US2018/0275009, US2011/048555 und US 2016/0343230 offenbart.

DE 10 2008 014 801 offenbart eine Einrichtung zur Leckageüberwachung bei zylindrischen Anordnungen, bei der ein flexibler Feuchtesensor an die Oberfläche des zu überwachenden Geräts und/oder Leitung/Rohr bündig angelegt wird. Ein weiterer Leckagesensor offenbart JP 2008-285005.

Es ist daher Aufgabe der vorliegenden Erfindung, eine Vorrichtung zur Erfassung von Flüssigkeiten zu schaffen, die eine zuverlässige Detektion von Flüssigkeiten gewährleistet.

Diese Aufgabe wird mit einer Vorrichtung mit den Merkmalen des Anspruches 1 gelöst.

Bei der erfindungsgemäßen Vorrichtung ist an einem Boden ein kapazitiver Sensor angeordnet, der mit einer Steuerung zur Detektion einer unter den Boden laufenden Flüssigkeit versehen ist, wobei der Boden auf Fußelementen beabstandet von einem Untergrund abstellbar ist und durch die Fußelemente zumindest im Erfassungsbereich des Sensors geneigt zur Horizontalen ausgerichtet ist. Dadurch wird bei einem Unterströmen des Bodens mit Flüssigkeit der unter dem Boden angeordneten Luft ein Abströmen erleichtert, da diese an dem Boden entlang einer Neigung abströmen kann, so dass keine Luftblasen unter dem Boden im Leckagefall verbleiben. Dies erhöht die Zuverlässigkeit bei der Detektion von Flüssigkeiten.

Vorzugsweise ist an dem Boden mindestens ein Strömungskanal für Luft ausgebildet, durch den die Luft abströmen kann, wenn eine Flüssigkeit unter den Boden strömt. Der Strömungskanal kann dabei als nach unten offene Nut oder Aussparung ausgebildet sein. Über den Umfang verteilt können mehrere solcher Kanäle angeordnet sein, die sich vorzugsweise von einem mittleren Bereich nach außen erstrecken.

Die Neigung des Bodens liegt vorzugsweise in einem Bereich zwischen 1 ° bis 20°, insbesondere zwischen 2° bis 10°, zur Horizontalen. Dabei erfolgt die Messung der Neigung, wenn die Fußelemente auf einem horizontalen Untergrund abgestellt sind. Die Fußelemente besitzen dabei eine unterschiedliche Höhe, um die Neigung des Bodens zu gewährleisten.

In einer weiteren Ausgestaltung ist der kapazitive Sensor auf einer Leiterplatte angeordnet, die zumindest bereichsweise eine Öffnung an dem Boden des Gehäuses überdeckt. Dadurch können die Elektroden des Sensors im Bereich der Öffnung angeordnet sein, so dass eine Detektion einer Flüssigkeit nicht durch weitere Zwischenschichten oder Schutzschichten beeinträchtigt wird. Die Leiterplatte kann dabei mit dem Boden des Gehäuses dicht verklebt sein, so dass keine Flüssigkeit in das Gehäuse einlaufen kann.

Die Vorrichtung ist vorzugsweise autark ausgebildet und umfasst eine Aufnahme für eine Batterie zur Stromversorgung des Sensors und der Steuerung. Ferner kann die Steuerung auch einen Sender und einen Empfänger umfassen, mittels dem die Steuerung mit einer Überwachungsanlange kommunizieren kann, so dass eine Vielzahl von Vorrichtungen zur Erfassung von Flüssigkeiten in eine Überwachungsanlage eingebunden werden können, ohne dass eine Verkabelung notwendig ist.

Das Gehäuse der Vorrichtung ist vorzugsweise wannenförmig ausgebildet, wobei an dem wannenförmigen Unterteil ein Deckel fixiert sein kann. Das Gehäuse ist ferner schwimmfähig, kann also bei Umströmen mit einer Flüssigkeit angehoben werden. Dabei muss das Gehäuse nicht luftdicht abgeschlossen sein, sondern kann eine oder mehrere Öffnungen aufweisen, durch die beispielsweise der Schall im Alarmfall besser austreten kann.

Vorzugsweise ist an dem Deckel des Gehäuses eine Anzeige und/oder ein Bedienelement vorgesehen. Beispielsweise kann an der Leiterplatte der Vorrichtung ein Leuchtmittel für eine Statusanzeige vorgesehen sein, die über einen stabförmigen Lichtleiter zu einem Sichtfenster an dem Deckel geleitet wird. Neben einer solchen Anzeige kann auch ein Betätigungselement an dem Deckel vorgesehen sein, beispielsweise zur Inbetriebnahme der Vorrichtung und zum Starten des Kalibriervorgangs.

Die Erfindung wird nachfolgend anhand eines Ausführungsbeispiels mit Bezug auf die beigefügten Zeichnungen näher erläutert. Es zeigen:

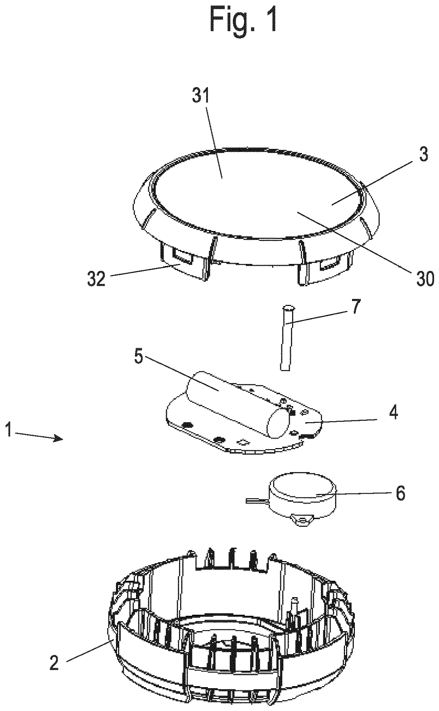

- Figur 1: eine perspektivische Explosionsdarstellung einer erfindungsgemäßen Vorrichtung zur Erfassung von Flüssigkeiten;
- Figuren 2 und 3: zwei Ansichten der Vorrichtung der Figur 1 in einer montierten Position, und
- Figuren 4A bis 4C: mehrere Ansichten der Leiterplatte der Vorrichtung der Figur 1.

Eine Vorrichtung 1 zur Detektion von Flüssigkeiten umfasst ein wannenförmiges Gehäuse 2, das eine obere Öffnung aufweist, die über einen Deckel 3 verschließbar ist. In dem Gehäuse 2 ist eine Leiterplatte 4 angeordnet, die einen kapazitiven Sensor aufweist, um eine unter das Gehäuse 2 laufende Flüssigkeit im Fall einer Leckage zu erfassen. Hierfür sind an der Leiterplatte 4 an der Unterseite mindestens zwei beabstandete Elektroden aufgebracht, die über eine Steuerung an der Leiterplatte 4 überwacht werden. An der Leiterplatte 4 ist eine Batterie 5 zur Stromversorgung angebracht.

Die Steuerung an der Leiterplatte 4 kann mit einer "Überwachungsanlage", beispielsweise in einer Daten-Cloud funktechnisch kommunizieren, die eine Vielzahl von Vorrichtungen 1 gleichzeitig überwachen kann. Hierfür sind entsprechende Sender und Empfänger an der Leiterplatte 4 vorgesehen. In dem Gehäuse 2 ist zudem ist ein akustischer Warnmelder 6 vorgesehen, der bei Detektion einer Leckage akustische Warnsignale ausgibt. Der Warnmelder 6 kann gekapselt ausgebildet sein, um auch bei einem Eintreten von Flüssigkeit in das Gehäuse 2 möglichst lange Warnsignale abgeben zu können.

An der Leiterplatte 4 ist ferner eine LED für eine Statusanzeige vorgesehen, die Licht emittiert, das in einen stabförmigen Lichtleiter 7 eingeleitet wird. Über den stabförmigen Lichtleiter 7 wird das Licht zu einem Sichtfenster 30 an dem Deckel 3 geleitet und ist somit von außen sichtbar. Das Sichtfenster 30 kann dabei durch die Stirnseite des Lichtleiters 7 gebildet sein, so dass die LED an dem Deckel 3 gut sichtbar ist. Zudem ist an dem Deckel 3 ein Betätigungselement 31, insbesondere ein Druckknopf, vorgesehen, mittels dem die Steuerung an der Leiterplatte 4 bedient werden kann, beispielsweise zur Inbetriebnahme der Vorrichtung und zum Starten des Kalibriervorgangs.

An dem Deckel 3 sind integral ausgebildete Rastelemente 32 zur Fixierung des Deckels 3 an dem Gehäuse 2 vorgesehen.

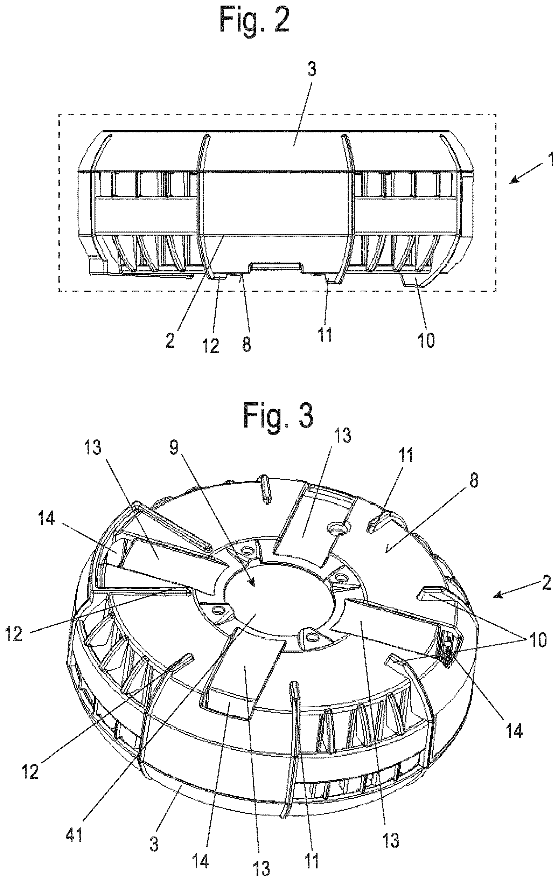

In den Figuren 2 und 3 ist die Vorrichtung 1 in einer montierten Position gezeigt. Das Gehäuse 2 mit dem Deckel 3 umfasst einen Boden 8, der über Fußelemente 10, 11 und 12 beabstandet von einem Untergrund abstellbar ist. Die über den Umfang des Gehäuses 2 verteilten Fußelemente 10, 11 und 12 besitzen dabei eine unterschiedliche Höhe, so dass der Boden 8 bei einem horizontalen ebenen Untergrund geneigt zur Horizontalen ausgerichtet ist, beispielsweise in einem Winkel zwischen 1 ° bis 20°, insbesondere 2° bis 10°. Hierfür sind die Fußelemente 10 höher ausgebildet als die Fußelemente 11, und die Fußelemente 11 sind höher ausgebildet als die Fußelemente 12. Die Fußelemente 10, 11 und 12 sind stegförmig ausgebildet, können aber auch eine andere Geometrie besitzen.

An dem Boden 8 des Gehäuses 2 ist ferner eine Öffnung 9 ausgespart, die durch die Leiterplatte 4 überdeckt ist. Die Leiterplatte 4 ist dabei abgedichtet mit dem Boden 8 verklebt, so dass über die Öffnung 9 keine Flüssigkeit in das Gehäuse 2 eindringen kann. Im Bereich der Öffnung 9 ist der kapazitive Sensor 41 mit mindestens zwei beabstandet angeordneten Elektroden vorgesehen.

An dem Boden 8 sind nach unten offene Strömungskanäle 13 ausgebildet, durch die Luft abströmen kann, wenn Flüssigkeit unter den Boden 8 strömt. In dem dargestellten Ausführungsbeispiel sind, ausgehend von der mittleren Öffnung 9, vier Strömungskanäle 13 vorgesehen, wobei die Anzahl der Strömungskanäle 13 vom Fachmann frei gewählt werden kann. Die Strömungskanäle 13 münden an einem Entlüftungskanal 14, der in einer gewissen Höhe in dem Gehäuse 2 endet. Das wannenförmige Gehäuse 2 ist mit der verklebten Leiterplatte 4 schwimmfähig und kann bei Ansteigen eines Flüssigkeitspegels somit aufschwimmen.

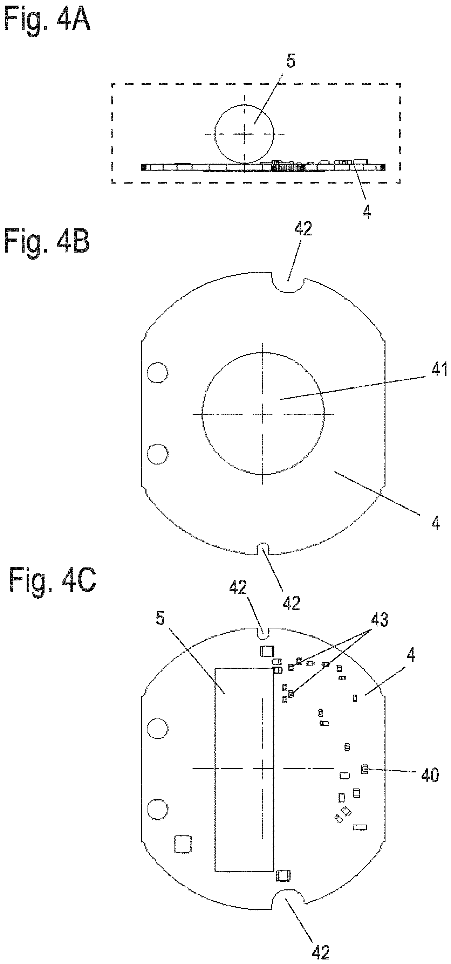

In den Figuren 4A bis 4C ist die Leiterplatte 4 mit der Batterie 5 gezeigt. Die Leiterplatte 4 umfasst ein Leuchtmittel 40 in Form einer LED, die Licht in den stabförmigen Lichtleiter 7 emittiert und somit eine Statusanzeige über das Sichtfenster 30 aussenden kann. An der Leiterplatte 4 ist ferner an der Unterseite der kapazitive Sensor 41 mit den Elektroden vorgesehen, der im Bereich der Öffnung 9 des Gehäuses 2 angeordnet ist. Die Leiterplatte 4 weist ferner Aussparungen 42 zur exakten Positionierung in dem Gehäuse 2 auf. An der Leiterplatte 4 können weitere elektronische Bauteile 43 vorgesehen sein, insbesondere auch Bedienelemente, wie Druckknöpfe, um die Vorrichtung ein- oder auszuschalten oder auch geeignete funktechnische Komponenten, zur drahtlosen Übermittlung von Zustandsparametern. Auf der Leiterplatte 4 kann zudem eine Auswerteelektronik angeordnet sein, die festlegt, bei welchem Zustand eine Warnmeldung ausgegeben wird. Durch die Ausrichtung des Sensors 41 geneigt zur Horizontalen kann bei einem Einströmen von Flüssigkeit zuverlässig eine Benetzung des Sensors ohne Lufteinschlüsse erreicht werden, da die Luft an dem Boden 8 seitlich abströmen kann.

Das Gehäuse 2 und optional auch der Deckel 3 bestehen vorzugsweise aus einem elektrisch leitfähigen Kunststoff, der auch säure- und laugenbeständig ist.

Die Vorrichtung wird beispielsweise in Auffangwannen für den Transport und die Lagerung von flüssigen Gefahrstoffen eingesetzt.

### Bezugszeichenliste

- 1: Vorrichtung
- 2: Gehäuse
- 3: Deckel
- 4: Leiterplatte
- 5: Batterie
- 6: Warnmelder
- 7: Lichtleiter
- 8: Boden
- 9: Öffnung
- 10: Fußelement
- 11: Fußelement
- 12: Fußelement
- 13: Strömungskanal
- 14: Entlüftungskanal
- 30: Sichtfenster
- 31: Betätigungselement
- 32: Rastelement
- 40: Leuchtmittel
- 41: Sensor
- 42: Aussparung
- 43: Bauteil

## Patentansprüche

1. Vorrichtung (1) zur Detektion von Flüssigkeit, insbesondere bei einer Leckage, mit einem Gehäuse (2), an dem an einem Boden (8) ein kapazitiver Sensor (41) angeordnet ist, der mit einer Steuerung zur Detektion einer unter den Boden (8) laufenden Flüssigkeit verbunden ist, wobei der Boden (8) auf Fußelementen (10, 11, 12) beanstandet von einem Untergrund abstellbar ist, **dadurch gekennzeichnet, dass** die Fußelemente (10, 11, 12) eine unterschiedliche Höhe besitzen, so dass der Boden (8) bei einem horizontalen ebenen Untergrund geneigt zur Horizontalen ausgerichtet ist.

2. Vorrichtung nach Anspruch 1, **dadurch gekennzeichnet, dass** an dem Boden (8) mindestens ein Strömungskanal (13) für Luft ausgebildet ist, durch den die Luft abströmen kann, wenn eine Flüssigkeit unter den Boden (8) strömt.

3. Vorrichtung nach Anspruch 1 oder 2, **dadurch gekennzeichnet, dass** die Neigung des Bodens (8) in einem Bereich zwischen 1° bis 20°, insbesondere 2° bis 10°, zur Horizontalen liegt.

4. Vorrichtung nach einem der vorhergehenden Ansprüche, **dadurch gekennzeichnet, dass** der kapazitive Sensor (41) auf einer Leiterplatte (4) angeordnet ist, die zumindest bereichsweise eine Öffnung (9) an dem Boden (8) des Gehäuses (2) überdeckt.

5. Vorrichtung nach Anspruch 4, **dadurch gekennzeichnet, dass** die Leiterplatte (4) dicht mit dem Boden (8) des Gehäuses (2) verklebt ist.

6. Vorrichtung nach einem der vorhergehenden Ansprüche, **dadurch gekennzeichnet, dass** an der Leiterplatte (4) eine Aufnahme für eine oder mehrere Batterien (5) zur Stromversorgung des Sensors (41) und der Steuerung vorgesehen ist.

7. Vorrichtung nach einem der vorhergehenden Ansprüche, **dadurch gekennzeichnet, dass** das Gehäuse (2) ein wannenförmiges unterteil aufweist, das mit der Leiterplatte (4) schwimmfähig ist.

8. Vorrichtung nach einem der vorhergehenden Ansprüche, **dadurch gekennzeichnet, dass** das Gehäuse (2) eine obere Öffnung aufweist, die durch einen Deckel (3) verschlossen ist.

9. Vorrichtung nach Anspruch 8, **dadurch gekennzeichnet, dass** an dem Deckel (3) eine Anzeige (30) und/oder ein Bedienelement (31) vorgesehen ist.

10. Vorrichtung nach einem der vorhergehenden Ansprüche, **dadurch gekennzeichnet, dass** auf der Leiterplatte (4) ein Leuchtmittel (40) für eine Statusanzeige vorgesehen ist, deren Licht über einen stabförmigen Lichtleiter (7) zu einem Sichtfenster (30) an einem Deckel (3) geleitet wird.

11. Vorrichtung nach einem der vorhergehenden Ansprüche, **dadurch gekennzeichnet, dass** der Sensor (41) mindestens zwei beabstandete Elektroden aufweist, die auf einer Leiterplatte (4) aufgebracht sind.

12. Vorrichtung nach einem der vorhergehenden Ansprüche, **dadurch gekennzeichnet, dass** die Steuerung einen funktechnischen Sender und einen Empfänger umfasst, mittels der die Steuerung über eine datentechnische Infrastruktur, wie einer Daten-Cloud, kommunizieren kann.

13. Vorrichtung nach einem der vorhergehenden Ansprüche, **dadurch gekennzeichnet, dass** das Gehäuse (2) aus einem elektrisch leitfähigen Kunststoff hergestellt ist.

## Claims

1. Device (1) for detecting liquid, in particular in the event of a leakage, having a housing (2) on which a capacitive sensor (41) is arranged on a base (8), which sensor is connected to a control unit for detecting a liquid running under the base (8), wherein the base (8) can be set down on foot elements (10, 11, 12) at a distance from a substrate, **characterized in that** the foot elements (10, 11, 12) have a different height, so that the base (8) is aligned inclined to the horizontal in the case of a horizontal flat substrate.

2. Device according to claim 1, **characterized in that** at least one flow channel (13) for air is formed on the base (8), through which the air can flow out when a liquid flows under the base (8).

3. Device according to claim 1 or 2, **characterized in that** the inclination of the base (8) is in a range between 1° and 20°, in particular 2° and 10°, to the horizontal.

4. Device according to one of the preceding claims, **characterized in that** the capacitive sensor (41) is arranged on a printed circuit board (4) which covers an opening (9) on the base (8) of the housing (2) at least in some sections.

5. Device according to claim 4, **characterized in that** the printed circuit board (4) is glued tightly to the base (8) of the housing (2).

6. Device according to one of the preceding claims, **characterized in that** a receptacle for one or more batteries (5) for supplying power to the sensor (41) and the control unit is provided on the printed circuit board (4).

7. Device according to one of the preceding claims, **characterized in that** the housing (2) has a trough-shaped lower part which is floatable with the printed circuit board (4).

8. Device according to one of the preceding claims, **characterized in that** the housing (2) has an upper opening which is closed by a cover (3).

9. Device according to claim 8, **characterized in that** a display (30) and/or an operating element (31) is provided on the cover (3).

10. Device according to one of the preceding claims, **characterized in that** an illuminant (40) for a status display is provided on the printed circuit board (4), the light of which is guided via a rod-shaped light guide (7) to a viewing window (30) on a cover (3).

11. Device according to one of the preceding claims, **characterized in that** the sensor (41) has at least two spaced electrodes which are applied to a printed circuit board (4).

12. Device according to one of the preceding claims, **characterized in that** the control unit comprises a radio-technical transmitter and a receiver, by means of which the control unit can communicate via a data technology infrastructure such as a data cloud.

13. Device according to one of the preceding claims, **characterized in that** the housing (2) is made of an electrically conductive plastic.

## Revendications

1. Dispositif (1) pour la détection de liquide, en particulier en cas de fuite, avec un boîtier (2) sur un fond (8) duquel est disposé un capteur capacitif (41) relié à une unité de commande pour la détection d'un liquide passant sous le fond (8), lequel fond (8) peut être écarté à distance d'un support sur des éléments formant des pieds (10, 11, 12), **caractérisé en ce que** les éléments formant des pieds (10, 11, 12) ont une hauteur différente, de sorte que le fond (8) est incliné par rapport à l'horizontale quand le support est horizontal et plan.

2. Dispositif selon la revendication 1, **caractérisé en ce qu'**est prévu dans le fond (8) au moins un canal de circulation (13) pour l'air, à travers lequel l'air peut s'échapper quand un liquide circule sous le fond (8).

3. Dispositif selon la revendication 1 ou 2, **caractérisé en ce que** l'inclinaison du fond (8) est comprise entre 1° et 20°, en particulier entre 2° et 10°, par rapport à l'horizontale.

4. Dispositif selon l'une des revendications précédentes, **caractérisé en ce que** le capteur capacitif (41) est disposé sur une carte de circuits (4) qui recouvre au moins par zones une ouverture (9) dans le fond (8) du boîtier (2).

5. Dispositif selon la revendication 4, **caractérisé en ce que** la carte de circuits (4) est collée hermétiquement au fond (8) du boîtier (2).

6. Dispositif selon l'une des revendications précédentes, **caractérisé en ce qu'**est prévu sur la carte de circuits (4) un logement pour une ou plusieurs piles (5) destinées à alimenter en énergie le capteur (41) et l'unité de commande.

7. Dispositif selon l'une des revendications précédentes, **caractérisé en ce que** le boîtier (2) comporte une partie inférieure en forme d'auge qui peut flotter avec la carte de circuits (4).

8. Dispositif selon l'une des revendications précédentes, **caractérisé en ce que** le boîtier (2) comporte une ouverture supérieure qui est fermée par un couvercle (3).

9. Dispositif selon la revendication 8, **caractérisé en ce qu'**un indicateur (30) et/ou un élément de commande (31) sont prévus sur le couvercle.

10. Dispositif selon l'une des revendications précédentes, **caractérisé en ce qu'**une lampe (40) servant d'indicateur d'état est prévue sur la carte de circuits (4) et sa lumière est amenée par un guide d'ondes lumineuses (7) en forme de barre jusqu'à une fenêtre de visualisation (30) sur un couvercle (3).

11. Dispositif selon l'une des revendications précédentes, **caractérisé en ce que** le capteur (41) comporte au moins deux électrodes écartées l'une de l'autre, qui sont placées sur une carte de circuits (4).

12. Dispositif selon l'une des revendications précédentes, **caractérisé en ce que** l'unité de commande comprend un émetteur et un récepteur radio au moyen desquels elle peut communiquer par l'intermédiaire d'une infrastructure d'échange de données telle qu'un nuage de données.

13. Dispositif selon l'une des revendications précédentes, **caractérisé en ce que** le boîtier (2) est fait d'une matière plastique conductrice électrique.
